# EUROPEAN PATENT APPLICATION

(11) **EP 4 645 069 A1**
(43) Date of publication of application: **05.11.2025**
(21) Application number: 23928456.5
(22) Date of filing: 22.12.2023
(51) Int. Cl.: G06F 8/61

(54) **METHOD, APPARATUS AND SYSTEM FOR CONSTRUCTING SOFTWARE PACKAGE, AND RELATED DEVICE**

(30) Priority: 23.03.2023 CN 202310320857
(71) Applicant: Huawei Technologies Co., Ltd., Shenzhen, Guangdong 518129 (CN)
(72) Inventor: WU, Fengguang, Shenzhen, Guangdong 518129 (CN); DUAN, Pengjie, Shenzhen, Guangdong 518129 (CN); XIONG, Wei, Shenzhen, Guangdong 518129 (CN); LIU, Bo, Shenzhen, Guangdong 518129 (CN); WEN, Hao, Shenzhen, Guangdong 518129 (CN)
(74) Representative: Goddar, Heinz J.
(86) International application number: PCT/CN2023/141002
(87) International publication number: WO 2024/193152

(57) **Abstract**

This application provides a software package building method, apparatus, and system, and a related device, and relates to the field of data processing technologies. A plurality of groups of customized files written in a markup language are obtained. The plurality of groups of customized files are used to configure a to-be-built software package, and each group of customized files includes at least one configuration item. Then, a configuration file is determined based on a fusion customization strategy and the plurality of groups of customized files. The configuration file includes at least one configuration item, and the fusion customization strategy is used to integrate a plurality of configuration items in the plurality of groups of customized files, for example, associate the plurality of configuration items and merge the plurality of configuration items. Then, the software package is built based on the configuration file. In this way, in a process of building the software package, a user does not need to modify a build script of the software package. This not only effectively reduces difficulty in building the software package in a customized manner by the user, but also improves friendliness of building the software package in a customized manner. In addition, this automated building process can also effectively improve efficiency of building the software package in a customized manner.

## Description

This application claims priority to Chinese Patent Application No. 202310320857.0, filed with the China National Intellectual Property Administration on March 23, 2023 and entitled "SOFTWARE PACKAGE BUILDING METHOD, APPARATUS, AND SYSTEM, AND RELATED DEVICE", which is incorporated herein by reference in its entirety.

### TECHNICAL FIELD

This application relates to the field of data processing technologies, and in particular, to a software package building method, apparatus, and system, and a related device.

### BACKGROUND

Currently, building a software package in a customized manner has become a common requirement in server, embedded, and other fields. For example, in the embedded field, software packages applied to different development boards are usually built in a customized manner, to adapt to customization requirements of the different development for the software packages.

In an actual application scenario, a user usually builds, based on a customization requirement of a customization party for a software package in a manner of modifying a build script of the software package, the software package that meets the customization requirement. This invasive software package building manner is complex to operate and has low efficiency in customized building.

Therefore, currently, a software package building method is urgently needed, to reduce difficulty in building a software package in a customized manner by a user, and improve efficiency of building the software package in a customized manner.

### SUMMARY

This application provides a software package building method, to reduce difficulty in building a software package in a customized manner by a user, and improve efficiency of building the software package in a customized manner. In addition, this application further provides a corresponding software package building apparatus and system, a computing device, a computer-readable storage medium, and a computer program product.

According to a first aspect, this application provides a software package building method, including: obtaining a plurality of groups of customized files, where the plurality of groups of customized files may be provided by one or more customization parties, and are used to configure a to-be-built software package, the plurality of groups of customized files are written in a markup language, for example, written in a language such as YAML or XML, and each group of customized files includes at least one configuration item, for example, a configuration item for a version of the software package and a configuration item for a tool file on which the to-be-built software package depends; then, determining a configuration file based on a fusion customization strategy and the plurality of groups of customized files, where the configuration file includes at least one configuration item, and the fusion customization strategy is used to integrate a plurality of configuration items in the plurality of groups of customized files, for example, associate the plurality of configuration items and merge the plurality of configuration items; and building the software package based on the configuration file.

In this way, in a process of building the software package, a user only needs to provide a customized file to build the software package in a customized manner, and the user does not need to modify a build script of the software package. This not only effectively reduces difficulty in building the software package in a customized manner by the user, but also improves friendliness of building the software package in a customized manner. In addition, this automated building process can also effectively improve efficiency of building the software package in a customized manner. In addition, when the plurality of groups of obtained customized files are from different customization parties, for example, from different users, based on the configuration manner, a plurality of customization parties can support comprehensive configuration for the software package. Moreover, the configuration manner can be applicable to software package building scenarios in a plurality of fields such as a server field and an embedded field.

In a possible implementation, when the plurality of groups of customized files are processed based on the fusion customization strategy, specifically, an integration operation may be performed, based on the fusion customization strategy, on the plurality of configuration items in the plurality of groups of customized files. The integration operation includes associating the plurality of configuration items or merging the plurality of configuration items. In this way, the plurality of configuration items are associated or merged to implement comprehensive configuration for the software package, thereby simplifying customization difficulty for the software package. For example, different customization parties can participate in customization of a software package, and a same customization party can customize a software package for a plurality of times in different time periods, or the like.

In a possible implementation, when the integration operation is performed on the plurality of configuration items in the plurality of groups of customized files, specifically, the plurality of configuration items in the plurality of groups of customized files may be mapped to configuration space; then a reference relationship between different configuration items in the configuration space is established based on keys and values of the plurality of configuration items; the plurality of configuration items in the plurality of groups of customized files are merged to obtain a merging result, for example, the plurality of configuration items are merged in an internal reference or inheritance manner; and the configuration file is generated based on the reference relationship between the different configuration items in the configuration space and the merging result. In this way, the reference relationship between the different configuration items is established to associate the different configuration items, and the configuration items are associated and merged to integrate the plurality of configuration items.

In a possible implementation, when the plurality of configuration items in the plurality of groups of customized files are merged, specifically, a merging operation provided by the user may be obtained, and the plurality of configuration items in the plurality of groups of customized files are merged based on the merging strategy. In this way, the user can intervene in merging the configuration items, thereby improving configuration flexibility.

In a possible implementation, in a process of integrating the plurality of configuration items, a tool code file may be further mapped to a field in the configuration space. A value of the field is a value fed back after the tool code file is run. In this way, not only a function of referencing an independent program code script in a customized file can be implemented, but also the independent program code script can be used as an independent file for debugging, thereby reducing debugging difficulty.

In a possible implementation, before the software package is built, a check strategy provided by the user may be further obtained, for example, a check strategy provided by the user through a strategy configuration interface; and a value of a configuration item in the configuration file is checked based on the check strategy. In this way, the value of the configuration item may be checked, so that an abnormal configuration item can be found (and intercepted) in a timely manner, thereby improving configuration correctness, and further improving software development efficiency and software development quality.

In a possible implementation, a format of the configuration file determined based on the fusion customization strategy is a first format, for example, a YAML format; and when the software package is built, specifically, the format of the configuration file may be converted to obtain a configuration file in a second format, for example, obtain through conversion a configuration file in an SPEC format, and the software package is built based on the configuration file in the second format. In this way, the format of the configuration file is converted, so that requirements of a plurality of formats of the configuration file can be met, and applicable scenarios of building a software package in a customized manner can be increased.

In a possible implementation, when the plurality of groups of customized files are obtained, specifically, customized files provided by a plurality of users using a client may be obtained, to obtain the plurality of groups of customized files. Each user may provide at least one group of customized files. In this way, a plurality of different users can perform comprehensive configuration for the software package.

In a possible implementation, a data structure of each customized file in each group of customized files is a layered organizational structure. In this way, an attribute configuration of the software package at each layer can be specified based on the layered organizational structure.

According to a second aspect, this application provides a software package building apparatus. The software package building apparatus includes modules configured to perform the software package building method according to any one of the first aspect or the possible implementations of the first aspect.

According to a third aspect, this application provides a building system. The system includes at least one client, and the software package building apparatus in the second aspect. A user may provide one or more groups of customized files for the building system by using a client.

According to a fourth aspect, this application provides a computing device. The computing device includes a processor, a memory, and a display. The processor and the memory communicate with each other. The processor is configured to execute instructions stored in the memory, so that the computing device performs the software package building method according to any one of the first aspect or the implementations of the first aspect. It should be noted that the memory may be integrated into the processor, or may be independent of the processor. The computing device may further include a bus. The processor is connected to the memory through the bus. The memory may include a readable memory and a random access memory.

According to a fifth aspect, this application provides a computer-readable storage medium. The computer-readable storage medium stores instructions. When the instructions are run on a computing device, the computing device is enabled to perform an operation step in the software package building method according to any one of the first aspect or the implementations of the first aspect.

According to a sixth aspect, this application provides a computer program product including instructions. When the computer program product runs on a computing device, the computing device is enabled to perform an operation step in the software package building method according to any one of the first aspect or the implementations of the first aspect.

In this application, based on the implementations provided in the foregoing aspects, the implementations may be further combined to provide more implementations.

### BRIEF DESCRIPTION OF DRAWINGS

FIG. 1 is a diagram of an example of a structure of a building system configured to build a software package according to this application;
FIG. 2 is a schematic flowchart of a software package building method according to this application;
FIG. 3 is a diagram of a flatten operation performed on a plurality of layers of keys and values;
FIG. 4 is a diagram of determining a value of a configuration item based on a priority of a layer to which a configuration file belongs;
FIG. 5 is a diagram of an example of an enabling configuration interface according to this application;
FIG. 6 is a diagram of an example of a strategy configuration interface according to this application;
FIG. 7 is a diagram of an example of a configuration interface according to this application;
FIG. 8 is a diagram of mapping a value of a configuration item in a YAML format to a value of a configuration item in a SPEC format;
FIG. 9 is a diagram of a structure of a software package building apparatus according to this application; and
FIG. 10 is a diagram of a hardware structure of a computing device according to this application.

### DESCRIPTION OF EMBODIMENTS

To reduce difficulty in building a software package in a customized manner by a user and improve efficiency of building the software package in a customized manner, this application provides a software package building method. According to layered customization scenarios of different requirements of a user, configuration items in a plurality of groups of configuration files are integrated (for example, different configuration items are associated and merged) based on a fusion customization strategy to generate a configuration file, and the software package is built based on the configuration file. The user does not need to modify a build script of the software package. This reduces difficulty in building the software package in a customized manner by the user, improves friendliness of building the software package, and also effectively improves efficiency of building the software package in a customized manner.

The following describes technical solutions in this application with reference to the accompanying drawings in embodiments of this application.

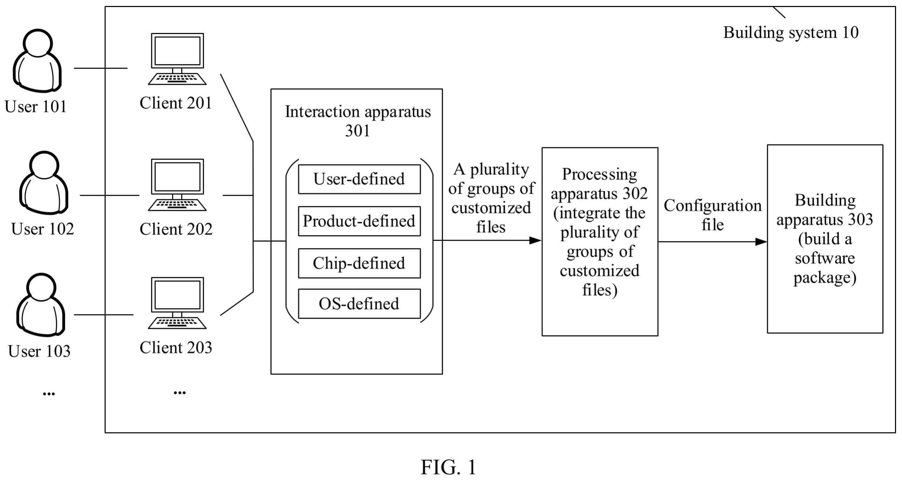

FIG. 1 is a diagram of an example of a structure of a building system configured to build a software package according to an embodiment of this application. As shown in FIG. 1, the building system 10 may provide a software package building service for a plurality of users. In FIG. 1, an example in which a user 101 to a user 103 are included is used for description. Each user may request, by using a client (for example, a client 201 to a client 203 in FIG. 1), to build a software package in the building system 10. The client may be, for example, a web browser provided by the building system 10 for the outside. In addition, each user may perform corresponding configuration on a same software package or different software packages according to a customization requirement (for example, a customization requirement corresponding to a hardware environment in which the software package is run), so that the software package built by the building system 10 meets the customization requirement of the user.

As shown in FIG. 1, the building system 10 may include an interaction apparatus 301, a processing apparatus 302, and a building apparatus 303.

The interaction apparatus 301 is configured to obtain a plurality of groups of customized files, for example, obtain a group of customized files that are defined for the software package and that are provided by the user 101 to the building system 10 by using the client 201. The group of customized files are written in a markup language. For example, the markup language may be a YAML ain't a markup language (YAML ain't a markup language, YAML) or an extensible markup language (extensible markup language, XML). In addition to receiving the group of customized files provided by the user 101, the interaction apparatus 301 further obtains at least one another group of customized files for the software package, for example, further obtains a group of customized files defined based on a product to which the software package belongs, a group of customized files defined based on a chip to which the software package is applied, and a group of customized files defined based on an operating system (operating system, OS) to which the software package is applied, as shown in FIG. 1. Alternatively, the interaction apparatus 301 may obtain a plurality of groups of customized files that are defined for a same software package and that are provided by a plurality of users (for example, the user 101, the user 102, and the user 103). Then, the interaction apparatus 301 provides the plurality of groups of obtained customized files to the processing apparatus 302.

The processing apparatus 302 is configured to determine a configuration file based on a fusion customization strategy and the plurality of groups of customized files. The configuration file includes at least one configuration item. The fusion customization strategy may be a strategy configured in the building system 10 before the software package is built, and is used to integrate a plurality of configuration items in the plurality of groups of customized files, for example, may be used to associate configuration items in the plurality of groups of customized files, or merge configuration items in the plurality of groups of customized files, or perform both an association operation and a merging operation on configuration items. Then, the processing apparatus 302 may provide the determined configuration file to the building apparatus 303.

The building apparatus 303 is configured to build the software package based on the configuration file. During actual application, the building apparatus 303 may specifically perform code compilation based on the configuration file and source code in a software project, to obtain the software package. The building apparatus 303 may perform code compilation in a native compilation or cross compilation manner. Native compilation means code compilation based on an architecture (for example, an x86 architecture) of a compilation environment required by code. Cross compilation means code compilation based on another architecture (for example, an ARM architecture) that is different from the architecture of the compilation environment required by the code. The built software package, for example, may be a package manager (redhat package manager, RPM).

In this way, in a process of building the software package, the building system 10 integrates the plurality of configuration items in the plurality of groups of customized files based on the fusion customization strategy, determines the configuration file, and builds the software package based on the configuration file. This allows the user to only provide a customized file to the building system 10 to build the software package in a customized manner, and the user does not need to modify a build script of the software package. This not only effectively reduces difficulty in building the software package in a customized manner by the user, but also improves friendliness of building the software package in a customized manner. In addition, this automated building process can also effectively improve efficiency of building the software package in a customized manner.

In addition, when the plurality of groups of customized files obtained by the interaction apparatus 301 are from different customization parties, for example, from different users, based on the configuration manner, the building system 10 can support a plurality of customization parties in performing comprehensive configuration for the software package. Moreover, the configuration manner can be applicable to software package building scenarios in a plurality of fields such as a server field and an embedded field.

Further, after the software package is built, the building apparatus 303 may further generate an operating system image based on one or more built software packages and a customized operation performed by the user for the software package. In this case, the building system 10 may be specifically an operating system building system. Alternatively, the building apparatus 303 may generate an application (application) based on one or more built software packages and a customized operation performed by the user for the software package. In this case, the building system 10 may be specifically an application development system or the like.

For example, the building system 10 (including the interaction apparatus 301, the processing apparatus 302, and the building module 303) may be implemented by using software or hardware.

In a first example, when being implemented by using software, the building system 10 may be, for example, implemented by using at least one of a virtual machine, a container, and a computing engine.

In a second example, when being implemented by using hardware, the building system 10 may be implemented by using at least one physical device including a processor. The processor may be any one or any combination of the following processors: a central processing unit (central processing unit, CPU), an application-specific integrated circuit (application-specific integrated circuit, ASIC), a programmable logic device (programmable logic device, PLD), a complex programmable logic device (complex programmable logic device, CPLD), a field-programmable gate array (field-programmable gate array, FPGA), generic array logic (generic array logic, GAL), a system on chip (system on chip, SoC), a software-defined architecture (software-defined infrastructure, SDI) chip, an artificial intelligence (artificial intelligence, AI) chip, a data processing unit (data processing unit, DPU), and the like. In addition, the building system 10 may include one or more processors, and may include one or more types of processors. Specifically, a quantity and a type of processors may be set according to a service requirement during actual application. This is not limited in this embodiment.

It should be noted that the building system 10 shown in FIG. 1 is merely used as an example for description. In another applicable building system, the building system may provide a cloud service of building a software package for any quantity of users, or the like; or a client in the building system may be an application deployed on a user-side device, or the like; or the building system may be deployed on a user side, and provide a localized service for a user. In this way, one or more users may directly provide a plurality of groups of customized files on an interaction interface provided by the building system, and trigger the building system to build the software package in a customized manner based on the plurality of groups of customized files. A specific structure of the building system and an application scenario to which the building system is applicable are not limited in this application.

For ease of understanding, the following describes, with reference to the accompanying drawings, an embodiment of a software package building method provided in this application.

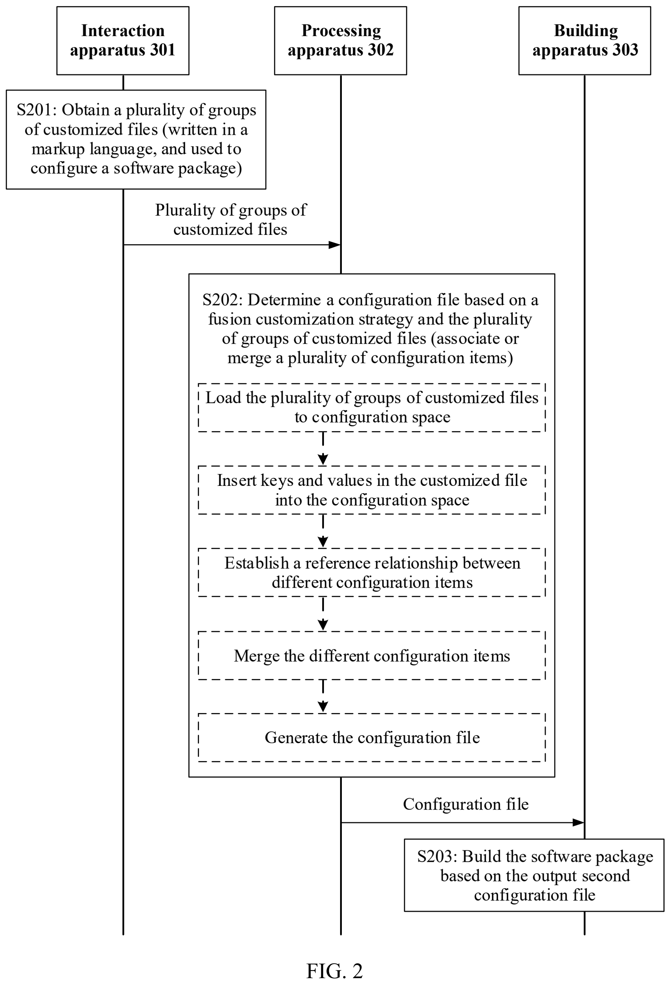

FIG. 2 is a schematic flowchart of a software package building method according to an embodiment of this application. The method may be applied to the building system 10 shown in FIG. 1, or may be applied to another applicable building system. For ease of description, an example in which the method is applied to the building system 10 shown in FIG. 1 is used for description in this embodiment.

The software package building method shown in FIG. 2 may specifically include the following steps.

S201: The interaction apparatus 301 obtains a plurality of groups of customized files, where the plurality of groups of customized files are used to configure a to-be-built software package, the plurality of groups of customized files are written in a markup language, and each of the plurality of groups of customized files includes at least one configuration item.

The markup language is a language used to mark information (such as a data structure and a variable value) related to a text (such as source code). For example, the markup language may be, for example, any one or more of markup languages in a YAML format, an XML format, a JavaScript object notation (JavaScript object notation, JSON) format, a Tom's obvious minimal language (Tom's obvious minimal language, TOML) format, a Jsonnet format, or a cue sheet (cue sheet, CUE) format, or may be a markup language of another type.

The plurality of groups of customized files that are written in the markup language and that are obtained by the interaction apparatus 301 may be from different customization parties, and each customization party may provide at least one group of customized files. For example, the interaction apparatus 301 may obtain four groups of customized files, for example, a group of customized files provided by the user 101, a group of customized files provided by a product vendor according to a product requirement, a group of customized files provided by a chip vendor according to a chip requirement, and a group of customized files provided by an OS vendor according to an OS requirement, as shown in FIG. 1. For another example, the plurality of groups of customized files obtained by the interaction apparatus 301 are from different users, and each user provides at least one group of customized files to the interaction apparatus 301 by using a client.

Alternatively, the plurality of groups of customized files obtained by the interaction apparatus 301 may be from a same customization party. For example, the user 101 may provide the plurality of groups of customized files to the interaction apparatus 301, and each group of customized files may be customized files complied by the user 101 for the software package in different time periods.

Each group of customized files includes at least one customized file. The customized file may include one or more of the following: a customized file for the software package, a customized file for a library on which the software package depends, a customized file for a field type in the software package, or a customized file defined by the user.

The customized file may be written by a user in a markup language, or may be a customized file generated based on the markup language by using a corresponding tool (for example, a configuration conversion tool or a configuration identification tool) according to existing customization information, or the like. A specific implementation of generating the customized file is not limited in this embodiment.

Each customized file includes one or more configuration items, and the configuration item is an item included in a configuration management scope. For example, the customized file may include a configuration item a and a configuration item b. The configuration item a is used to configure a tool file that needs to be depended on when the software package is built, and the configuration item b is used to configure a version number, version permission, or the like of the software package.

Further, a data structure of the customized file complied in the markup language may be a layered organizational structure, so that data in the customized file may be layer model data. In this case, data at each layer in the layered organizational structure may be used to configure attributes of the software package at a same layer. For example, the customized file may include data of a two-layer organizational structure. Data of a first-layer organizational structure is used to configure a kernel (kernel)-related attribute in the software package, and data of a second-layer organizational structure is used to configure a development board (board)-related attribute in the software package. In addition, an attribute configuration at each layer may include one or more of the following: a configuration for the software package, a configuration for a library on which the software package depends, a configuration of a field type in the software package, and a configuration defined by the user.

Correspondingly, a path directory used to load the group of customized files may be defined in the customized file written in the markup language, so that the interaction apparatus 301 subsequently loads a corresponding customized file based on the path directory. For example, the user 101 may write a customized file named main_config.yaml, and a multi-layer directory defined in the customized file is as follows:

```
          layers:
              - path1
              - path2
              - path3
              ...
```

Each path (path) is used to load customized files written by users for attributes at a same layer.

In addition, in the customized file written in the markup language, a directory structure including a plurality of layers (layers) may be further defined, and customized files stored in each directory may be defined in the directory structure. For example, a layers directory structure defined by the user 101 may be as follows:

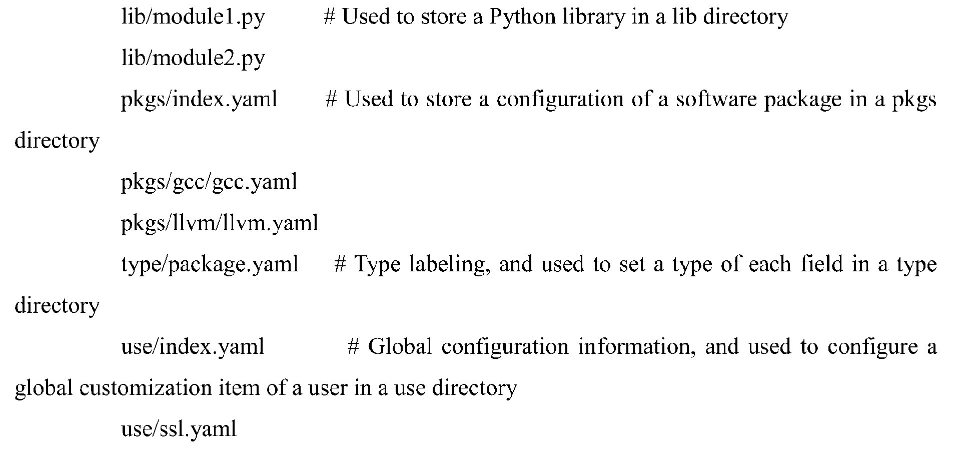

In another implementation, the customized file written by the user 101 may alternatively use a data structure in another form. This is not limited in this embodiment.

For example, a configuration item included in the customized file (namely, the customized file stored in the pkgs directory) may be defined in a key-value (key-value) manner. For example, the following content may be defined in a customized file for the software package (pkgs):

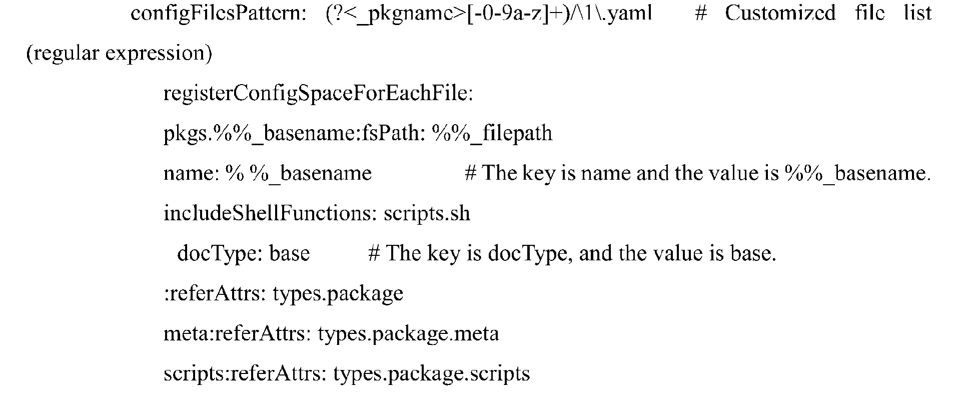

A necessary implicit field that needs to be supported by a macro reference defined by using "%%" is replaced with a corresponding actual value when the field is referenced. Details are not described herein.

In an implementation of obtaining the customized file, the interaction apparatus 301 may obtain a plurality of groups of customized files uploaded by one or more users using a client. For example, the client may present an interaction interface to the user, so that the user may upload a customized file on the interaction interface; or after the user performs a customization operation for the software package on the interaction interface, the client generates a corresponding customized file and uploads the customized file.

The interaction apparatus 301 provides the plurality of groups of obtained configuration files to the processing apparatus 302.

S202: The processing apparatus 302 determines a configuration file based on a fusion customization strategy and the plurality of groups of customized files, where the configuration file includes at least one configuration item, and the fusion customization strategy is used to integrate a plurality of configuration items in the plurality of groups of customized files.

In an actual application scenario, when the processing apparatus 302 obtains the plurality of groups of customized files, the processing apparatus 302 may load, based on a loading path defined in the configuration file, the plurality of groups of customized files to created configuration space (config space). For example, the processing apparatus 302 may read a customized file named main _config.yaml; traverse, based on the customized file, customized files for attributes of the software package at each layer, including a customized file for the software package, a customized file for a library on which the software package depends, a customized file for a field type, a customized file defined by the user, and the like; and load customized files obtained through traversing to the configuration space. In this way, the customized file can be mapped to the configuration space, that is, the configuration item in the customized file is mapped to the configuration space.

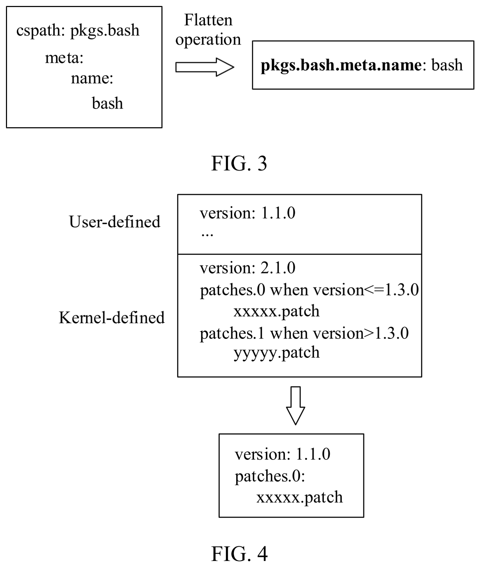

After loading the plurality of groups of customized files, the processing apparatus 302 may further insert keys and values of the plurality of groups of customized files into the configuration space. In an implementation example, some keys and values in the plurality of groups of customized files may form a plurality of layers. Therefore, the processing apparatus 302 may perform a flatten operation on a plurality of layers of keys and values in the plurality of groups of customized files, that is, compress the plurality of layers of keys and values into one layer of a key and a value, add a global reference path for the key and the value (to implement mapping with the configuration space), and insert the key and the value into the configuration space. For example, as shown in FIG. 3, it is assumed that the plurality of layers of keys and values included in the customized file are two layers of keys and values shown on a left side of FIG. 3. A key at a first layer is "meta", and a value at the first layer is "name:bash". A key at a second layer is "name", and a value at the second layer is "bash". Then, after performing the flatten operation on the plurality of layers of keys and values, the processing apparatus 302 may compress the plurality of layers of keys and values into one layer of a key and a value: "meta.name: bash". In this case, the key is "meta.name", and the value is "bash". Then, the processing apparatus 302 adds a global reference path "pkgs.bash" for the key and the value to obtain a key and a value "pkgs.bash.meta.name: bash" shown on a right side of FIG. 3, and inserts the key and the value into the configuration space.

Further, for an independent program code script on which the configuration item depends, for example, a shell script, a Python script, or a changlog script, the processing apparatus 302 may further map the code script to a field in the configuration item.

The shell script is used as an example. It is assumed that a build function and a post function shown below are defined in the shell script.

| | |
|---|---|
| build() { | post() { |
| make | %post -p /sbin/ldconfig |
| } | } |

Then, the processing apparatus 302 may separately map the build function and the post function to fields shown below.

| | |
|---|---|
| phase.build: \| | runtime-phase.post: \| |
| make | %post -p /sbin/ldconfig |

In this way, not only a function of referencing an independent program code script in a customized file can be implemented, but also the independent program code script can be used as an independent file for debugging, thereby reducing debugging difficulty.

Then, the processing apparatus 302 may perform an integration operation on different configuration items in the configuration space based on the fusion customization strategy. The integration operation may be, for example, associating the different configuration items, or merging the plurality of configuration items, or both associating the plurality of association items and merging the plurality of association items. The fusion customization strategy may be a strategy configured in the building system 10 by the user 101 or a skilled person before the software package is built in a customized manner, and is used to integrate the plurality of configuration items.

During specific implementation, the processing apparatus 302 may establish a reference relationship between the different configuration items in the configuration space based on the fusion customization strategy and based on the keys and the values in the configuration space, to associate the different configuration items.

In a first example, the processing apparatus 302 may establish the reference relationship between the different configuration items in the configuration space in a macro replacement manner. Macro replacement means replacing the configuration item b with a macro defined for the configuration item a. Then, a value of the configuration item a is a value of the replaced configuration item b. Specifically, the processing apparatus 302 may define macro replacement by using a specific identifier, for example, define macro replacement by using an identifier such as %%, %%%, d, or dd, where %% and d are used to implement macro replacement in a local range, and %%% and dd are used to implement macro replacement in a global range.

For example, it is assumed that a configuration item is pkgs.bash.release: "12", and macro replacement defined by using %% is %%release. Then, when a configuration item pkgs.bash.version: "1.3.%%release" is evaluated, a value of version is 1.3.12. In an actual evaluation process, the processing apparatus 302 may first traverse values of replaced configuration items from the configuration space. If a specific value of the configuration item exists in the configuration space, the processing apparatus 302 may directly read the value from the configuration space. If a specific value of the configuration item does not exist in the configuration space, the processing apparatus 302 may perform corresponding calculation in the configuration space to obtain a value of the configuration item. Further, the processing apparatus 302 may write the calculated value into the configuration space, so that the value of the configuration item can be directly read from the configuration space subsequently.

During actual application, a software project developed by the user 101 may include a plurality of software packages, so that configuration items corresponding to each software package may form a local range. In this case, macro replacement defined by using %% or d can reference another configuration item corresponding to a same software package. All configuration items corresponding to a plurality of software packages in the same software project can be used to build a global range. In this case, macro replacement defined by using %%% or dd can reference all configuration items corresponding to the plurality of software packages, that is, a configuration item corresponding to another software package can be further referenced.

In a second example, the processing apparatus 302 may establish an association between one configuration item and a plurality of other configuration items in an inheritance manner. For example, key fields such as inherit (inherit) and include (include) can be defined in the customized file, so that configuration items can be referenced in batches based on these key fields. The inherit field is used to inherit attributes of a plurality of other configuration items into one configuration item. For example, it is assumed that content of the configuration item is specifically "inherit source.path". Then, the processing apparatus 302 may inherit all keys and values from a specified global path into a current configuration item path. The include field is used to reference a plurality of values of configuration items of a same type, for example, reference a plurality of values of a configuration item version, such as a plurality of version numbers.

In other embodiments, in addition to establishing the reference relationship between the different configuration items in the foregoing two example manners, the reference relationship between the different configuration items may alternatively be established in another manner. This is not limited herein. In addition, the reference relationship between the different configuration items may be established only based on the first implementation example, or the reference relationship between the different configuration items may be established only based on the second implementation example.

During actual application, in a process of associating the different configuration items, the processing apparatus 302 may read (and calculate) data in a lazy load (lazy load) manner, that is, when content of a configuration item needs to be used, the configuration item is actually read from a customized file, to avoid a problem of long-time non-response caused by reading a large amount of configuration item content at an initial stage. During specific implementation, the processing apparatus 302 may first read a value of the configuration item from the configuration space when reading the value of the configuration item; and then read (and calculate) the value of the configuration item from a file of specified content when the value of the configuration item does not exist in the configuration space.

After establishing the reference relationship between the configuration items in the plurality of groups of customized files, the processing apparatus 302 further merges (merge) the configuration items in the plurality of groups of customized files based on the fusion customization strategy, and obtains a corresponding merging result. For example, in the plurality of groups of customized files, a plurality of available values may be configured for a same configuration item. For example, a plurality of different version numbers may be configured for a configuration item version. Therefore, the processing apparatus 302 merges values of a plurality of configuration items of a same type to determine a unique value of the configuration item. Merging the configuration items in the plurality of groups of customized files is merging the configuration items in the configuration space.

For example, when merging the plurality of configuration items, the processing apparatus 302 may specifically perform any one of the following operations on values of the plurality of configuration items: concat (concat), append (append), and (and), and or (or). "concat" means concatenating character strings corresponding to values of a plurality of configuration items into one character string. "append" means appending a value of a configuration item to a value of another configuration item. "and" means retaining a plurality of different values of a plurality of configuration items. "or" means selecting from values of a plurality of configuration items to retain some values. In addition, the processing apparatus 302 may alternatively perform merging processing in another manner, for example, in a deduplication manner of deduplicating repeated configuration items, or in a manner of directly deleting some configuration items that meet a customization condition.

For ease of understanding, this embodiment provides the following several implementation examples of merging the plurality of configuration items.

In a first implementation example, the configuration item in the customized file has a priority attribute. For a plurality of values defined for a same configuration item in the plurality of groups of customized files, the processing apparatus 302 may select a value with a highest priority attribute from the plurality of values based on a priority attribute of each configuration item as a final value of the configuration item, that is, retain a value with a highest priority attribute from values of the plurality of configuration items. The priority attribute of the configuration item may be specifically determined based on a priority of a layer to which the customized file belongs. For example, as shown in FIG. 4, a configuration of a patch (patch) is as follows: When a software version number is earlier than or equal to 1.3.0, a patch of xxxxx.patch is selected; or when a software version number is later than 1.3.0, a patch of yyyyy.patch is selected. In addition, a software version defined at a kernel layer is 2.1.0, and a software version defined at a user layer is 1.1.0. Because a priority of the user layer is higher than a priority of the kernel layer, the processing apparatus 302 may determine that a final value of the patch is xxxxx.patch.

The priority of the layer to which the customized file belongs may be determined, for example, based on four priority determining conditions. A first level is a highest level, and corresponds to a configuration layer related to software package update. That is, when a configuration item at the configuration layer is a configuration item newly defined in software package update, a priority of the configuration item is the highest. A second layer is determined based on a type sequence of customized files included at the configuration layer. For example, a priority of a customized file of a type A may be specified to be higher than a priority of a customized file of a type B. A third layer is determined based on a number sequence of the configuration layer. For example, a larger value of the configuration layer indicates a higher priority of the configuration layer, and correspondingly indicates a higher priority of a value of a configuration item at the configuration layer. A fourth layer is determined based on a dictionary sequence of the configuration layer. For example, a higher name ranking of the configuration layer indicates a higher priority of the configuration layer. Alternatively, the priority attribute of the configuration item in the customized file may be determined in another manner. For example, a priority of a customization party may be used as a priority of each configuration item in a customized file provided by the customization party. This is not limited herein.

In a second implementation example, a key (key) in the configuration item may include a conditional statement. The conditional statement may be, for example, a when conditional statement, or may be a conditional statement of another type. In this way, in a process of merging the plurality of configuration items, the processing apparatus 302 may merge the plurality of configuration items based on a value of a conditional statement included in keys of each configuration item. For example, a when condition is added to the key of the configuration item, and an expression of the when condition is as follows:
key when condition: value;

A value of condition (condition) may be a fixed value. Alternatively, the value of condition may be calculated based on independent program code, for example, calculated by using a Python language. Specifically, reference to the Python code may be implemented by using a specific tag. For example, the independent program code such as Python may be embedded by using a character string tag including { {} }, or the independent program code such as Python may be embedded by using a key tag ending with "!". Alternatively, the value of condition may be calculated based on a group of new keys and values or the like. This is not limited in this embodiment.

If the value of condition in the expression is true (or 1), the expression is key:value. If the value of condition in the expression is false (or 0), the expression is equivalent to that the row does not exist. In this case, the processing apparatus 302 may delete the configuration item.

In a third implementation example, a value (value) in the configuration item may include a conditional statement. The conditional statement may be, for example, a when conditional statement, or may be a conditional statement of another type. In this way, the processing apparatus 302 may merge a plurality of configuration items with a same key for values of the plurality of configuration items with the same key based on a value of a conditional statement included in values of each configuration item. For example, it is assumed that specific content of the plurality of configuration items with the same key in the configuration space is as follows (used to configure a version number, where the version number is a value of values).

```
          pkgs.bash.version:values : [
          {value: "1.2.0", fspath:"$pkg.path", when: "condition_x"},
          {value: "1.3.0", fspath:"$pkg.path", when: "condition_y"},
          ]
```

The configuration item includes two values of version (version): 1.2.0 and 1.3.0. When merging the plurality of configuration items, the processing apparatus 302 may specifically calculate values of condition_x and condition_y. It is assumed that the value of condition_x is 1 (or true), and the value of condition_y is 0 (or false). Then, the processing apparatus 302 may delete the configuration item {value: "1.3.0", fspath:"$pkg.path", when: "condition_y"}, and retain the another configuration item, to merge the two configuration items. In this case, the version number (values) of version is 1.2.0.

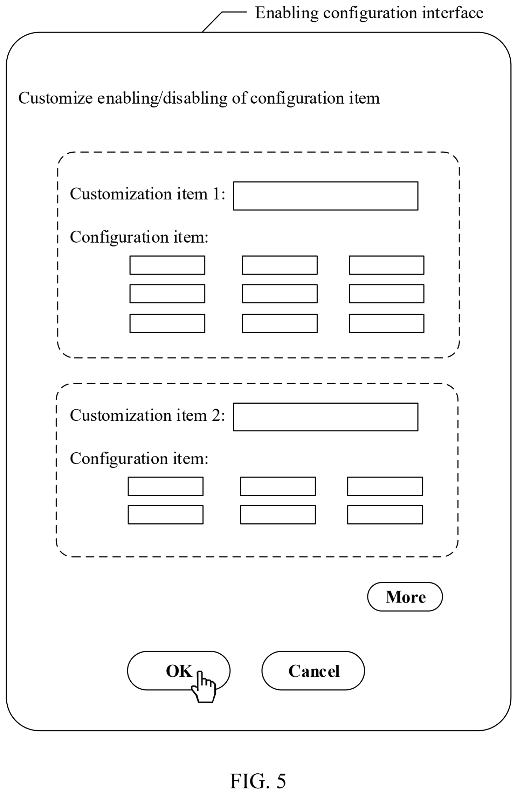

In a fourth implementation example, the processing apparatus 302 may merge the plurality of configuration items based on an enabling configuration of the user 101 for the plurality of configuration items. During specific implementation, the processing apparatus 302 may obtain a value of a customization item configured by the user 101. The customization item is used to control enabling of one or more configuration items (or may be referred to as a function of controlling enabling/disabling of a configuration item). For example, the processing apparatus 302 may present an enabling configuration interface to the user 101 using the client 201, for example, an enabling configuration interface shown in FIG. 5. In this way, the user 101 may configure one or more customization items for the plurality of configuration items on the enabling configuration interface, and define a value of the one or more customization items, so that the processing apparatus 302 may control, based on a value of f1, enabling or disabling of the configuration items.

For example, it is assumed that content of a plurality of configuration items shown below includes a customization item f1.

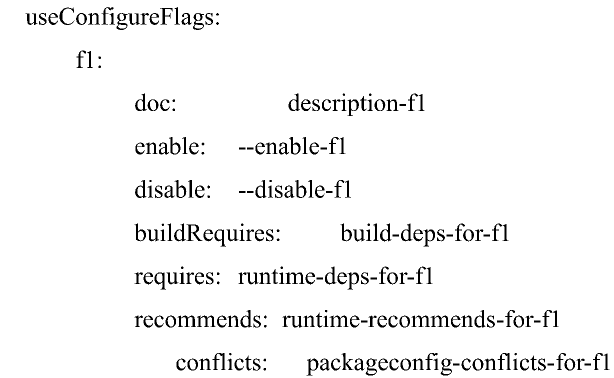

Then, the user 101 may define the value of f1 as 1 or true on the enabling configuration interface. In this case, the processing apparatus 302 may control enabling of these configuration items. Alternatively, the user 101 may define the value of fl as 0 or false on the enabling configuration interface. In this case, the processing apparatus 302 may control disabling of these configuration items. Correspondingly, in a process of merging the plurality of configuration items, the processing apparatus 302 filter these disabled configuration items, and perform a merging operation such as "concat", "append", "and", or "or" on the configuration items obtained through filtering, to obtain a corresponding merging result. In this way, without changing an underlying building description, the user 101 can implement complex customization and update configuration content of the software package by using a simple configuration.

In another embodiment, the processing apparatus 302 may alternatively merge the plurality of configuration items based on another implementation; or the processing apparatus 302 may combine any one of the plurality of foregoing implementations to merge the plurality of configuration items. This is not limited herein.

During actual application, the processing apparatus 302 may merge the plurality of configuration items based on a corresponding merging strategy. The merging strategy indicates to perform processing such as "concat", "append", "and", or "or" on the plurality of configuration items.

For example, a plurality of merging strategies may be statically pre-configured in the processing apparatus 302. In this way, when a plurality of configuration items need to be merged, the processing apparatus 302 may select, based on a type of the configuration item, a merging strategy that matches the type, and merge the plurality of configuration items based on the selected merging strategy. A mapping relationship between the type of the configuration item and the merging strategy may be pre-configured in the processing apparatus 302 by a skilled person, and the type of the configuration item may be classified or the like based on a function type or an attribute type of the configuration item.

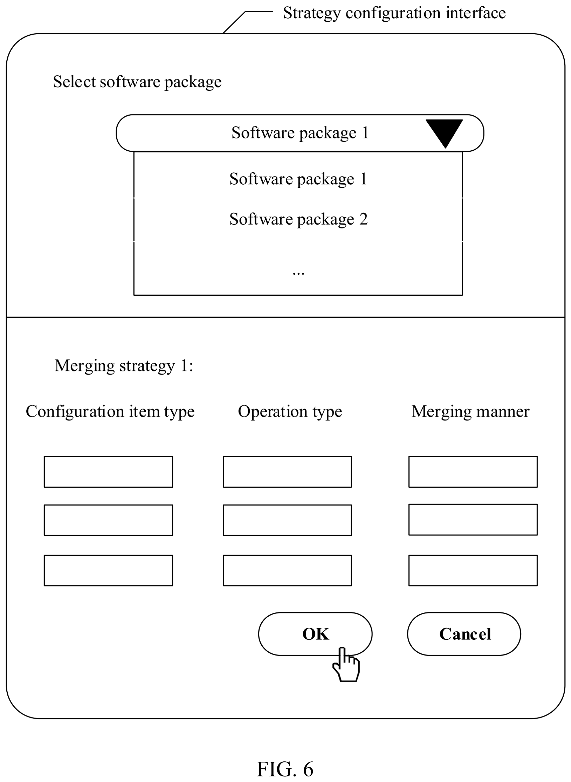

Alternatively, the processing apparatus 302 may support the user 101 to customize a merging strategy. During specific implementation, the processing apparatus 302 may provide a strategy configuration interface to the user 101 using the client 201, for example, a strategy configuration interface shown in FIG. 6. In this way, the user 101 may specify a software package on the strategy configuration interface, for example, select an identifier of a software package to be configured from identifiers of a plurality of software packages provided on the strategy configuration interface, and define specific content of one or more merging strategies for the specified software package, for example, define a type of a configuration item, a merging operation type, and a merging manner. In this way, the user 101 can intervene in merging the configuration items, thereby improving configuration flexibility.

Finally, the processing apparatus 302 may generate a configuration file based on the reference relationship between the different configuration items and the merging result of the configuration items. At least one configuration item included in the configuration file is a configuration item obtained after merging. In addition, when the configuration file includes a plurality of configuration items, the plurality of configuration items have the reference relationship.

Further, in a process of generating the configuration file, the processing apparatus 302 may check values of a plurality of configuration items obtained after reference and merging processing. During specific implementation, the processing apparatus 302 may obtain a check (check) strategy corresponding to each configuration item, for example, may determine a check strategy corresponding to the configuration item based on a type of the configuration item, so that the processing apparatus 302 may check a value of the configuration item based on the check strategy. For example, it is assumed that a check strategy corresponding to the configuration item a is value range check, namely, in an interval of [a minimum value, a maximum value]. Then, the processing apparatus 302 may check, based on the check strategy, whether a value of the configuration item a is between the minimum value and the maximum value. If a value of the configuration item a is between the minimum value and the maximum value, the processing apparatus 302 determines that the configuration item a passes the check. If a value of the configuration item a is not between the minimum value and the maximum value, the processing apparatus 302 may provide a corresponding error/alarm prompt for the value of the configuration item a. For another example, it is assumed that a check strategy corresponding to the configuration item b is as follows: A data type of a value is a character string (string) type. Then, the processing apparatus 302 may check, based on the check strategy, whether a data type of a value of the configuration item b is a character string type. If a data type of a value of the configuration item b is a character string type, it is determined that the configuration item b passes the check. If a data type of a value of the configuration item b is not a character string type, a corresponding error/alarm prompt may be provided for the value of the configuration item b. When the values of the plurality of configuration items all pass the check, the processing apparatus 302 may generate the configuration file based on the plurality of configuration items; or the processing apparatus 302 may first generate the configuration file, and then check the plurality of configuration items in the configuration file based on the check strategy. In this way, the value of the configuration item may be checked, so that an abnormal configuration item can be found (and intercepted) in a timely manner, thereby improving configuration correctness, and further improving software development efficiency and software development quality.

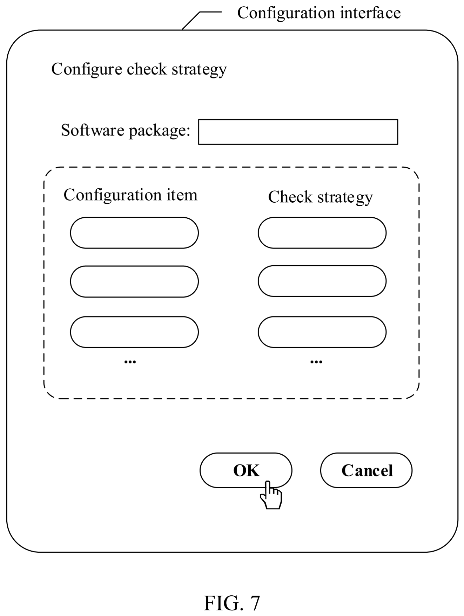

The check strategy corresponding to the configuration item may be a default strategy in the processing apparatus 302. For example, a skilled person may pre-configure these check strategies in the storage apparatus 301. Alternatively, the check strategy corresponding to the configuration item may be defined by the user 101. For example, the processing apparatus 302 may present a configuration interface to the user 101 using the client 201, for example, present a configuration interface shown in FIG. 7, so that the user 101 may configure a corresponding check strategy for a plurality of configuration items (for example, a plurality of configuration items with high importance) on the configuration interface. In this way, the processing apparatus 302 may check values of the plurality of configuration items in the configuration file based on the check strategy provided by the user 101.

S203: The building apparatus 303 builds the software package based on the configuration file.

In this embodiment, after determining the configuration file, the processing apparatus 302 may directly output the configuration file to the building apparatus 303 and the like, so that the building apparatus 303 builds the corresponding software package based on the configuration file.

Alternatively, in an actual application scenario, a format of the configuration file determined by the processing apparatus 302 may be inconsistent with a format of a configuration file supported by the building apparatus 303. For example, the format of the configuration file output by the processing apparatus 302 may be a YAML format, and the format of the configuration file that can be identified by the building apparatus 303 is a SPEC format. Therefore, in a possible implementation, before outputting the configuration file, the processing apparatus 302 may first convert the format of the configuration file determined based on the fusion customization strategy, and then output a configuration file obtained after format conversion to the building apparatus 303.

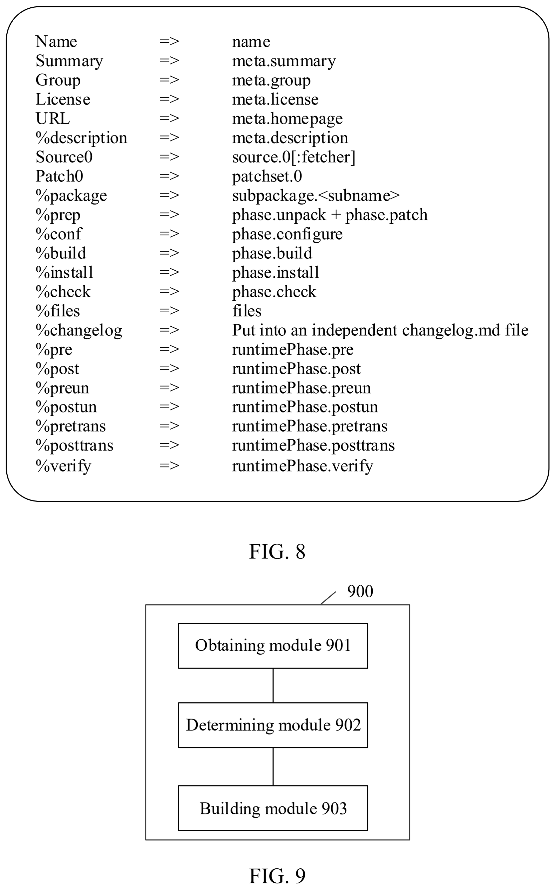

During specific implementation, it is assumed that the format of the configuration file determined by the processing apparatus 302 is a first format, and the format of the configuration file supported by the building apparatus 303 is a second format. Then, the processing apparatus 302 may traverse values of configuration items in the configuration file according to a specification corresponding to the second format, and map the value to a value in the second format. For example, as shown in FIG. 8, a left side shows values of configuration items in the YAML format, and the processing apparatus 302 may map, according to a specification corresponding to the SPEC format, the values of the configuration items on the left side to values in the SPEC format shown on a right side, for example, map Summary to meta. summary, map %description to meta. description, and map Source0 to source.0[:fetcher], so that a configuration file in the second format can be generated based on the values that are of the plurality of configuration items and that are obtained after mapping. In this way, after the processing apparatus 302 outputs the configuration file in the second format, the building apparatus 303 can directly execute a corresponding software package building process based on the configuration file in the second format.

Alternatively, after determining the configuration file based on the fusion customization strategy, the processing apparatus 302 may output the configuration file to the building apparatus 303. In this case, when the building apparatus 303 determines that the format of the received configuration file is inconsistent with the format of the configuration file used to build the software package, the building apparatus 303 may first convert the format of the received configuration file from the first format to the second format, and then build the software package based on the configuration file in the second format.

In a further possible implementation, before the building apparatus 303 builds the software package based on the configuration file, the configuration file may be further first output to the client 201, and the client 201 presents the configuration file to the user 101, so that the user 101 confirms values of configuration items in the configuration file. After the configuration file passes manual check of the user 101, the building apparatus 303 builds a corresponding software package based on each configuration item defined in the configuration file. In this way, accuracy of building the software package in a customized manner is further improved.

In an actual software development scenario, a software project to be developed by the user 101 may include a plurality of software packages, and each to-be-built software package may include at least one group of customized files. In this case, for each software package, by using the software package building process shown in FIG. 2, the building system 10 may perform, based on the fusion customization strategy, an integration operation on a customized file corresponding to each software package, and build the software package based on a configuration file obtained through integration, to build each software package in the software project, thereby building the entire software project in the building system 10.

In this embodiment, in a process of building the software package, the building system 10 integrates the plurality of configuration items in the plurality of groups of customized files based on the fusion customization strategy, determines the configuration file, and builds the software package based on the configuration file. This allows the user to only provide a customized file to the building system 10 to build the software package in a customized manner, and the user does not need to modify a build script of the software package. This not only effectively reduces difficulty in building the software package in a customized manner by the user, but also improves friendliness of building the software package in a customized manner. In addition, this automated building process can also effectively improve efficiency of building the software package in a customized manner. In addition, when the plurality of groups of customized files obtained by the building system 10 are from different customization parties, for example, from different users, based on the configuration manner, the building system 10 can support a plurality of customization parties in performing comprehensive configuration for the software package. Moreover, the configuration manner can be applicable to software package building scenarios in a plurality of fields such as a server field and an embedded field.

It should be noted that another appropriate step combination that can be figured out by a person skilled in the art based on the content described above also falls within the protection scope of this application. In addition, a person skilled in the art should also be familiar to that embodiments described in this specification are all preferred embodiments, and the related actions are not necessarily required in this application.

The foregoing describes, with reference to FIG. 1 to FIG. 8, the software package building method provided in embodiments of this application. The following describes, with reference to the accompanying drawings, a function of a software package building apparatus according to an embodiment of this application and a computing device that implements the software package building apparatus.

FIG. 9 is a diagram of a structure of a software package building apparatus. The apparatus 900 includes:
an obtaining module 901, configured to obtain a plurality of groups of customized files, where the plurality of groups of customized files are used to configure a to-be-built software package, the plurality of groups of customized files are written in a markup language, and each of the plurality of groups of customized files includes at least one configuration item;
a determining module 902, configured to determine a configuration file based on a fusion customization strategy and the plurality of groups of customized files, where the configuration file includes at least one configuration item, and the fusion customization strategy is used to integrate a plurality of configuration items in the plurality of groups of customized files; and
a building module 903, configured to build the software package based on the configuration file.

In a possible implementation, the determining module 902 is specifically configured to:
perform, based on the fusion customization strategy, an integration operation on the plurality of configuration items in the plurality of groups of customized files. The integration operation includes associating the plurality of configuration items or merging the plurality of configuration items.

In a possible implementation, the determining module 902 is specifically configured to:
map the plurality of configuration items in the plurality of groups of customized files to configuration space;
establish a reference relationship between different configuration items in the configuration space based on keys and values of the plurality of configuration items;
merge the plurality of configuration items in the plurality of groups of customized files to obtain a merging result; and
generate the configuration file based on the reference relationship between the different configuration items in the configuration space and the merging result.

In a possible implementation, the determining module 902 is specifically configured to:
obtain a value of a customization item configured by a user;
perform filtering, based on the value of the customization item, on the plurality of configuration items in the plurality of groups of customized files; and
merge configuration items obtained through filtering in the plurality of groups of customized files to obtain the merging result.

In a possible implementation, the determining module 902 is specifically configured to:
obtain a merging strategy provided by the user; and
merge, based on the merging strategy, the plurality of configuration items in the plurality of groups of customized files.

In a possible implementation, the determining module 902 is further configured to:
map a tool code file to a field in the configuration space. A value of the field is a value fed back after the tool code file is run.

In a possible implementation, the building module 903 is further configured to:
obtain a check strategy provided by the user before building the software package based on the configuration file; and
check a value of a configuration item in the configuration file based on the check strategy.

In a possible implementation, a format of the configuration file is a first format; and the building module 903 is specifically configured to:
convert the format of the configuration file to obtain a configuration file in a second format; and
build the software package based on the configuration file in the second format.

In a possible implementation, the obtaining module 901 is specifically configured to:
obtain customized files provided by a plurality of users using a client, to obtain the plurality of groups of customized files.

In a possible implementation, a data structure of each customized file in each group of customized files is a layered organizational structure.

In this way, in a process of building the software package, the user only needs to provide a customized file to the building system 10 to build the software package in a customized manner, and the user does not need to modify a build script of the software package. This not only effectively reduces difficulty in building the software package in a customized manner by the user, but also improves friendliness of building the software package in a customized manner. In addition, this automated building process can also effectively improve efficiency of building the software package in a customized manner. In addition, when the plurality of groups of obtained customized files are from different customization parties, for example, from different users, based on the configuration manner, a plurality of customization parties can support comprehensive configuration for the software package. Moreover, the configuration manner can be applicable to software package building scenarios in a plurality of fields such as a server field and an embedded field.

The software package building apparatus shown in FIG. 9 corresponds to the method shown in FIG. 2. Therefore, for a specific implementation of the software package building apparatus 900 shown in FIG. 2 and technical effects thereof, refer to the related descriptions in the foregoing embodiments. Details are not described herein again.

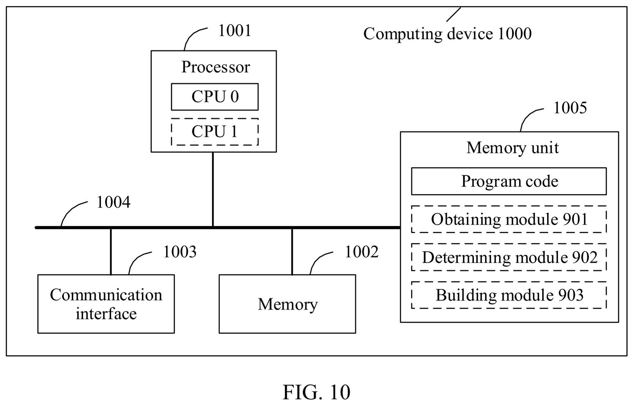

FIG. 10 is a diagram of a computing device 1000 according to this application. The computing device 1000 may be, for example, the terminal 201 in the embodiment shown in FIG. 4.

As shown in FIG. 10, the computing device 1000 includes a processor 1001, a memory 1002, and a communication interface 1003. The processor 1001, the memory 1002, and the communication interface 1003 communicate with each other through a bus 1004, or may implement communication in another manner such as wireless transmission. The memory 1002 is configured to store instructions, and the processor 1001 is configured to execute the instructions stored in the memory 1002. Further, the computing device 1000 may include a memory unit 1005, and the memory unit 1005 may be connected to the processor 1001, the storage medium 1002, and the communication interface 1003 through the bus 1004. The memory 1002 stores program code, and the processor 1001 may invoke the program code stored in the memory 1002 to perform the following operations:
obtain a plurality of groups of customized files, where the plurality of groups of customized files are used to configure a to-be-built software package, the plurality of groups of customized files are written in a markup language, and each of the plurality of groups of customized files includes at least one configuration item;
determine a configuration file based on a fusion customization strategy and the plurality of groups of customized files, where the configuration file includes at least one configuration item, and the fusion customization strategy is used to integrate a plurality of configuration items in the plurality of groups of customized files; and
build the software package based on the configuration file.

It should be understood that, in embodiments of this application, the processor 1001 may be a CPU, or the processor 1001 may be another general-purpose processor, a digital signal processor (DSP), an application-specific integrated circuit (ASIC), a field-programmable gate array (FPGA) or another programmable logic device, a discrete gate or transistor logic device, a discrete device component, or the like. The general-purpose processor may be a microprocessor, any conventional processor, or the like.

The memory 1002 may include a read-only memory and a random access memory, and provide instructions and data for the processor 1001. The memory 1002 may further include a non-volatile random access memory. For example, the memory 1002 may further store information about a device type.

The memory 1002 may be a volatile memory or a non-volatile memory, or may include both a volatile memory and a non-volatile memory. The non-volatile memory may be a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), or a flash memory. The volatile memory may be a random access memory (random access memory, RAM), and is used as an external cache. Through an example but not a limitative description, many forms of RAMs may be used, for example, a static random access memory (static RAM, SRAM), a dynamic random access memory (DRAM), a synchronous dynamic random access memory (synchronous DRAM, SDRAM), a double data rate synchronous dynamic random access memory (double data rate SDRAM, DDR SDRAM), an enhanced synchronous dynamic random access memory (enhanced SDRAM, ESDRAM), a synchlink dynamic random access memory (synchlink DRAM, SLDRAM), and a direct rambus random access memory (direct rambus RAM, DR RAM).

The communication interface 1003 is configured to communicate with another device connected to the computing device 1000. In addition to a data bus, the bus 1004 may further include a power bus, a control bus, a status signal bus, and the like. However, for clarity of description, various buses are marked as the bus 1004 in the figure.

It should be understood that the computing device 1000 according to this embodiment of this application may correspond to the software package building apparatus 900 in embodiments of this application, and may correspond to the building system 10 that performs the method shown in FIG. 2 in embodiments of this application. In addition, the foregoing and other operations and/or functions implemented by the computing device 1000 are separately used to implement a procedure of the corresponding method in FIG. 2. For brevity, details are not described herein again.

Embodiments of this application further provide a computer-readable storage medium. The computer-readable storage medium may be any usable medium accessible by a computing device, or a data storage device, such as a data center, including one or more usable media. The usable medium may be a magnetic medium (for example, a floppy disk, a hard disk drive, or a magnetic tape), an optical medium (for example, a DVD), a semiconductor medium (for example, a solid-state drive), or the like. The computer-readable storage medium includes instructions, and the instructions instruct the computing device to perform the software package building method.

Embodiments of this application further provide a computer program product. The computer program product includes one or more computer instructions. When the computer instructions are loaded and executed on a computing device, the procedures or functions according to embodiments of this application are all or partially generated.

The computer instructions may be stored in a computer-readable storage medium, or may be transmitted from one computer-readable storage medium to another computer-readable storage medium. For example, the computer instructions may be transmitted from a website, computer, or data center to another website, computer, or data center in a wired (for example, a coaxial cable, an optical fiber, or a digital subscriber line (DSL)) or wireless (for example, infrared, radio, or microwave) manner.

The computer program product may be a software installation package. When any one of the software package building methods needs to be used, the computer program product may be downloaded and the computer program product may be executed on the computing device.

All or some of the foregoing embodiments may be implemented by using software, hardware, firmware, or any combination thereof. When software is used to implement embodiments, the foregoing embodiments may be implemented completely or partially in a form of a computer program product. The computer program product includes one or more computer instructions. When the computer program instructions are loaded or executed on a computer, the procedures or functions according to embodiments of this application are all or partially generated. The computer may be a general-purpose computer, a dedicated computer, a computer network, or another programmable apparatus. The computer instructions may be stored in a computer-readable storage medium, or may be transmitted from one computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (DSL)) or wireless (for example, infrared, radio, or microwave) manner. The computer-readable storage medium may be any usable medium accessible by a computer, or a data storage device, such as a server or a data center, integrating one or more usable media. The usable medium may be a magnetic medium (for example, a floppy disk, a hard disk drive, or a magnetic tape), an optical medium (for example, a DVD), or a semiconductor medium. The semiconductor medium may be a solid-state drive.

The foregoing descriptions are merely specific implementations of this application, but are not intended to limit the protection scope of this application. Any equivalent modification or replacement readily figured out by a person skilled in the art within the technical scope disclosed in this application shall fall within the protection scope of this application. Therefore, the protection scope of this application shall be subject to the protection scope of the claims.

## Claims

1. A software package building method, wherein the method comprises:
obtaining a plurality of groups of customized files, wherein the plurality of groups of customized files are used to configure a to-be-built software package, the plurality of groups of customized files are written in a markup language, and each of the plurality of groups of customized files comprises at least one configuration item;
determining a configuration file based on a fusion customization strategy and the plurality of groups of customized files, wherein the configuration file comprises at least one configuration item, and the fusion customization strategy is used to integrate a plurality of configuration items in the plurality of groups of customized files; and
building the software package based on the configuration file.

2. The method according to claim 1, wherein processing, based on the fusion customization strategy, the plurality of groups of customized files comprises:
performing, based on the fusion customization strategy, an integration operation on the plurality of configuration items in the plurality of groups of customized files, wherein the integration operation comprises associating the plurality of configuration items or merging the plurality of configuration items.

3. The method according to claim 2, wherein performing, based on the fusion customization strategy, the integration operation on the plurality of configuration items in the plurality of groups of customized files comprises:
mapping the plurality of configuration items in the plurality of groups of customized files to configuration space;
establishing a reference relationship between different configuration items in the configuration space based on keys and values of the plurality of configuration items;
merging the plurality of configuration items in the plurality of groups of customized files to obtain a merging result; and
generating the configuration file based on the reference relationship between the different configuration items in the configuration space and the merging result.

4. The method according to claim 3, wherein merging the plurality of configuration items in the plurality of groups of customized files to obtain the merging result comprises:
obtaining a value of a customization item configured by a user;
performing filtering, based on the value of the customization item, on the plurality of configuration items in the plurality of groups of customized files; and
merging configuration items obtained through filtering in the plurality of groups of customized files to obtain the merging result.

5. The method according to claim 3 or 4, wherein merging the plurality of configuration items in the plurality of groups of customized files comprises:
obtaining a merging strategy provided by the user; and
merging, based on the merging strategy, the plurality of configuration items in the plurality of groups of customized files.

6. The method according to any one of claims 3 to 5, wherein the method further comprises:
mapping a tool code file to a field in the configuration space, wherein a value of the field is a value fed back after the tool code file is run.

7. The method according to any one of claims 1 to 6, wherein before building the software package based on the configuration file, the method further comprises:
obtaining a check strategy provided by the user; and
checking a value of a configuration item in the configuration file based on the check strategy.

8. The method according to any one of claims 1 to 7, wherein a format of the configuration file is a first format; and building the software package based on the configuration file comprises:
converting the format of the configuration file to obtain a configuration file in a second format; and
building the software package based on the configuration file in the second format.

9. The method according to any one of claims 1 to 8, wherein obtaining the plurality of groups of customized files comprises:
obtaining customized files provided by a plurality of users using a client, to obtain the plurality of groups of customized files.

10. The method according to any one of claims 1 to 9, wherein a data structure of each customized file in each group of customized files is a layered organizational structure.

11. A software package building apparatus, wherein the apparatus comprises:
an obtaining module, configured to obtain a plurality of groups of customized files, wherein the plurality of groups of customized files are used to configure a to-be-built software package, the plurality of groups of customized files are written in a markup language, and each of the plurality of groups of customized files comprises at least one configuration item;
a determining module, configured to determine a configuration file based on a fusion customization strategy and the plurality of groups of customized files, wherein the configuration file comprises at least one configuration item, and the fusion customization strategy is used to integrate a plurality of configuration items in the plurality of groups of customized files; and
a building module, configured to build the software package based on the configuration file.

12. A building system, wherein the building system comprises at least one client, and the software package building apparatus according to claim 11.

13. A computing device, comprising a processor and a memory, wherein
the processor is configured to execute instructions stored in the memory, so that the computing device performs a step in the method according to any one of claims 1 to 10.

14. A computer-readable storage medium, comprising instructions, wherein when the instructions are run on a computing device, the computing device is enabled to perform a step in the method according to any one of claims 1 to 10.
